# EUROPEAN PATENT SPECIFICATION

(11) **EP 2 615 807 B1**
(45) Date of publication and mention of the grant of the patent: **20.05.2015**
(21) Application number: 12305044.5
(22) Date of filing: 12.01.2012
(51) Int. Cl.: H04M 1/667, H04W 12/12

(54) **Method to protect a mobile against robbery**
Verfahren zum Schutz eines Mobiltelefons vor Diebstahl
Procédé pour protéger un mobile contre le vol

(43) Date of publication of application: 17.07.2013
(73) Proprietor: ALCATEL LUCENT, 92100 Boulogne-Billancourt (FR)
(72) Inventor: Denhez, Alain, 78141 Velizy (FR)
(74) Representative: Sciaux, Edmond

(56) References cited:
- WO-A1-99/57843
- DE-A1- 10 127 123
- US-A1- 2007 077 912

## Description

The technical domain of the invention is the domain of cellular communication networks, and particularly counter measures to prevent robbery of mobile equipment.

A mobile equipment, such as a cellular phone, a smartphone, etc. is uniquely identified by an equipment identifier such as an international mobile equipment identifier or IMEI. Such IMEI is stored in the memory of the mobile equipment and can be requested and obtained on demand.

In order to connect to a cellular communication network and to use its services, such as e.g. phone call, a mobile equipment needs to subscribe to a cellular communication network. Such a subscription is materialized by a universal subscriber identity module or USIM, in the form of a card, that must be in said mobile equipment, in order to have said equipment being able to connect to and to use the services of said cellular communication network. Such a subscription is uniquely identified by a subscriber identifier such as an international mobile subscriber identifier or IMSI. Such subscriber identifier IMSI is stored in the memory of the USIM and can be requested and obtained on demand.

When a mobile equipment is stolen, its owner can declare the theft and provides the subscriber identifier IMSI of the stolen USIM. Following said declaration, a dedicated module present in most networks, enforces said declaration by checking the subscriber identifier IMSI of any would be connecting mobile subscriber against a list of stolen subscriber identifier IMSI, and blocks any connection from a stolen mobile subscriber. US2007/077912 discloses a method to protect a mobile equipment against robbery.

Alternately or complementarily, the owner of a stolen mobile equipment can declare the theft and provides the equipment identifier IMEI of the stolen mobile equipment. Following said declaration, a dedicated module, such as an equipment identity register, EIR, present in most networks, enforces said declaration by checking the equipment identifier IMEI of any would be connecting mobile equipment against a list of stolen equipment identifier IMEI, and blocks any connection from a stolen mobile equipment.

This is a smart solution, however, not all networks comprises such a dedicated module to check stolen subscriber identifier IMSI and/or equipment identifier IMEI. So a stolen mobile equipment may be used into a more permissive foreign cellular communication network.

A need exists to provide a means to protect a mobile equipment against robbery.

An embodiment concerns a method to protect a mobile equipment against robbery comprising the steps of: building an external backward code including the equipment identifier of said mobile equipment and a subscriber identifier of a registered mobile subscriber, by using an algorithm, storing said external backward code into said mobile equipment, computing an internal backward code including the equipment identifier of said mobile equipment and the subscriber identifier of the mobile subscriber used in said mobile equipment, using the same algorithm as the building step, checking validity of the internal backward code against the stored external backward code, allowing normal use of the mobile equipment if said validity check is positive.

According to another feature, the building step is protected by a providing of a forward code delivered at purchase with said mobile equipment.

According to another feature, the algorithm further includes a building date and/or a building order number into an external or internal backward code.

According to another feature, the allowing step allows only a restricted use of the mobile equipment if the validity check is negative.

According to another feature, the allowing step allows a grace number of normal uses of the mobile equipment before a first external backward code is stored.

According to another feature, the allowing step allows a grace period of normal use of the mobile equipment following a negative validity check.

According to another feature, said grace period is computed based on network time.

According to another feature, a new reduced grace period starts at each change of used mobile subscriber not validated by a stored external backward code.

According to another feature, the storing step further comprises the steps of checking coherency of the external backward code and counting a number of coherency check failures.

According to another feature, the allowing step does not allow any use of the mobile equipment when said grace number is exceeded or said grace period is elapsed or the number of coherency check failures exceeds a threshold.

According to another feature, after an obsolescence period has elapsed, a normal use of the mobile equipment is always allowed.

According to another feature, the method further comprises a step of displaying on the mobile equipment a logo indicative of the state of the method among "protected", when an external backward code is stored into the mobile equipment, and "unprotected", when not.

Others features, details and advantages of the invention will become more apparent from the detailed illustrating description given hereafter with respect to the drawings on which:
- figure 1 is a diagram figuring the registration of an external backward code, during registration phase
- figure 2 is a flow chart figuring the steps of the method during registration phase,
- figure 3 is a flow chart figuring the steps of the method during use phase,
- figure 4 is a diagram figuring validity checking of a backward code, during use phase.

The main idea of the invention is to associate a registered equipment identifier IMEI-R of a mobile equipment ME with at least a registered subscriber identifier IMSI-R of a registered mobile subscriber RMS, in order to be able to verify the couple mobile equipment ME / mobile subscriber MS before any use.

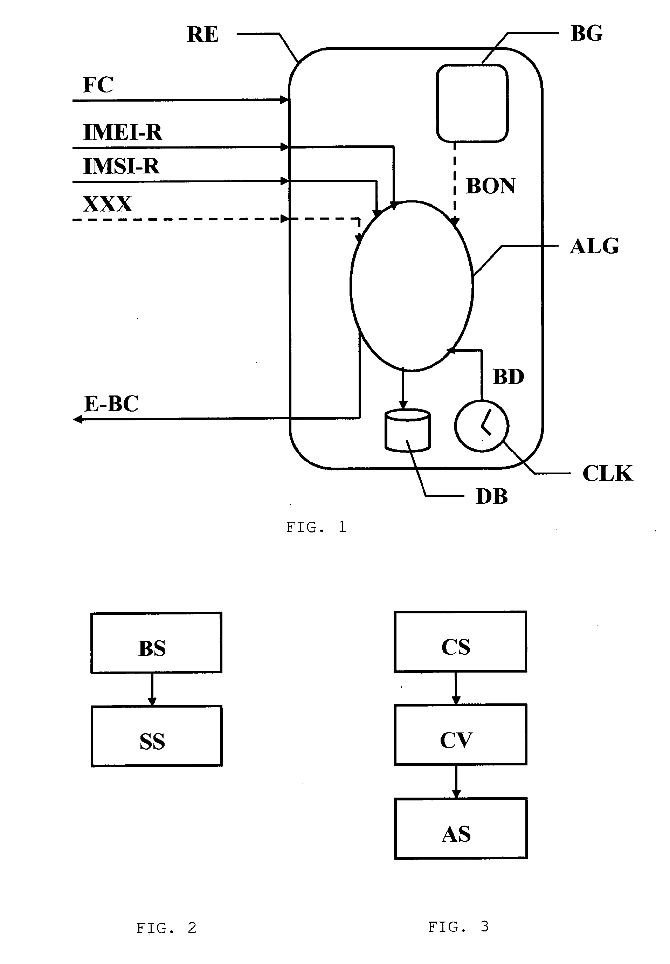

As illustrated in figure 1, said association of a registered equipment identifier IMEI-R with a registered subscriber identifier IMSI-R is built into an external backward code E-BC, by using an algorithm ALG, during a building step BS.

Said external backward code E-BC is then stored into the memory of the mobile equipment ME, during a storing step SS.

These two steps, building BS and storing SS, are typically applied during an initial registering phase.

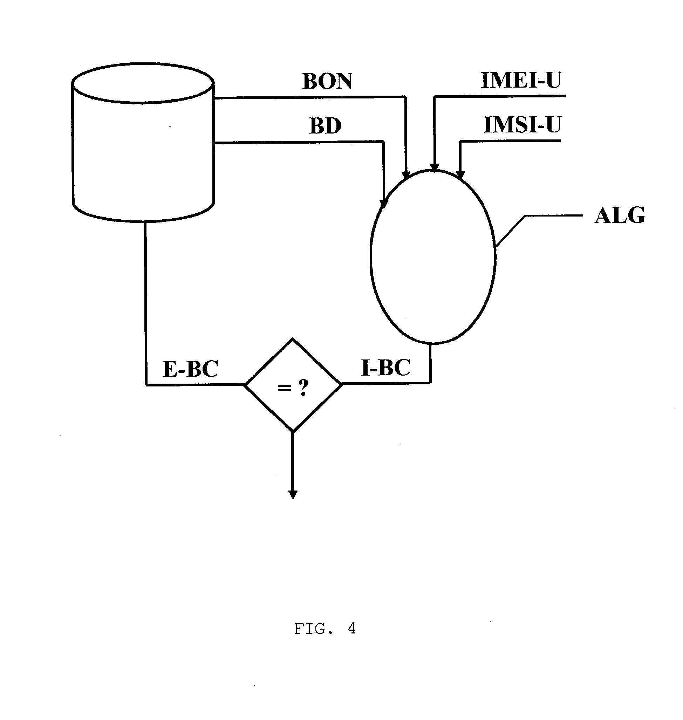

As illustrated in figure 4, during a use phase, every time said mobile equipment ME is used, e.g. at each power on, an internal backward code I-BC can be computed. Said internal backward code I-BC is computed during a computing step CS that typically uses the same algorithm ALG as the building step BS and applies it to the effectively used equipment identifier IMEI-U of said mobile equipment ME and to the effectively used subscriber identifier IMSI-U of the used mobile subscriber U-MS effectively used in said mobile equipment ME at computation time.

During a checking validity CV step, said just computed internal backward code I-BC, can be compared to the previously stored external backward code E-BC. If both internal and external backward code I-BC, E-BC, compares, then the used subscriber identifier IMSI-U of the used mobile subscriber U-MS certainly compares to the registered subscriber identifier IMSI-R of the registered mobile subscriber R-MS that has been declared and associated to the registered equipment identifier IMEI-R of the mobile equipment ME during the registering phase that built and stored the external backward code E-BC.

Said method, and particularly the checking validity CV step, thus allows detecting a, maybe unauthorized, change of mobile subscriber / USIM card. Accordingly, depending on the result of said validity check, actions can be taken to efficiently prevent an unauthorized use of the mobile equipment ME, in case of an unauthorized replacement of the USIM card.

A positive result indicates the USIM card has not been changed since the last registering and that the used subscriber identifier IMSI-U of the used mobile subscriber U-MS is the same as the registered subscriber identifier IMSI-R of the registered mobile subscriber R-MS and corresponds to the stored external backward code E-BC. Such a positive result can trigger a normal use authorisation of the mobile equipment ME.

A negative result indicates that the USIM card has been changed and no new corresponding external backward code E-BC has been stored in the mobile equipment ME. The used subscriber identifier IMSI-U of the used mobile subscriber U-MS differs from the registered subscriber identifier IMSI-R of the registered mobile subscriber R-MS as included in the stored external backward code E-BC. Such a negative result can trigger either a restricted use authorisation of the mobile equipment ME or a blocking of the mobile equipment ME forbidding any use.

Advantageously, said method can be implemented, at least for the use phase, by the mobile equipment ME itself, without the need of any external node, such as an equipment identity register EIR.

Since a valid external backward code E-BC, once registered and stored in a mobile equipment ME, fully allows a normal use of the mobile equipment ME, the registering phase, that the building BS and storing steps SS must be protected, at least against an unauthorised access.

To do so, the building step BS, may advantageously asks a user requesting a registration and the building of an external backward code E-BC to prove that he is an authorized owner/user. This may include any means to authenticate said user.

According to an interesting feature, a unique forward code FC is delivered along with a mobile equipment ME at purchase. Consequently, the knowledge of said forward code FC is deemed to be limited to the owner of the mobile equipment ME. Thus, said forward code FC can advantageously be checked before the building step BS in order to authenticate the requesting user and so to protect said building step BS.

The building step BS is typically conducted by a registering entity RE that may be a network server. Said registering entity RE typically manages a database DB comprising the forward code FC associated to each equipment identifier IMEI, in order to check the correctness of a forward code FC.

If the provided forward code FC is not correct, no external backward code E-BC is built. If the provided forward code FC is correct, the building of an external backward code E-BC can carry on.

This efficiently prevents a robber of the mobile equipment ME, not supposed to know said forward code FC, from obtaining a valid external backward code E-BC, and thus from validly replacing the mobile subscriber / USIM card by another mobile subscriber.

If a robber would decide to keep the current mobile subscriber, said robber would rapidly face other anti robbery counter measures. A robber would soon be requested to provide e.g. a PIN code, which he typically does not know. Either, if the subscriber identifier IMSI has been declared stolen, said stolen mobile subscriber is prone to be blocked or banned from network. A robber would then try to replace a stolen mobile subscriber / USIM card by a mobile subscriber / USIM card of his choice, e.g. a mobile subscriber the robber owns.

It can also be noted that the proposed method is compatible with existing anti robbery counter measures, such as equipment identifier register EIR or subscriber identifier register. Despites the proposed method can operate alone without such an equipment identifier register EIR, when e.g. no equipment identifier register EIR or equivalent is implemented in a communication network, if such an equipment identifier register EIR is present, both counter measure means efficiently cooperate.

It has been previously mentioned that the algorithm ALG, used by both the building step BS and the computing step CS, associates in a backward code BC at least an equipment identifier IMEI and a subscriber identifier IMSI. Said algorithm ALG can also include other parameters XXX.

Another included parameter can e.g. be a building date BD, that is, the date when the building step BS that produces said external backward code E-BC occurs. The inclusion of such a building date BD, e.g. provided by a clock module CLK, is useful in that it makes said external backward code E-BC unique and at least different from an external backward code E-BC built from the same data but on another date. It is also useful for the mobile equipment ME to know said building date BD, as a reference date, in order to be able to compute periods, such as a grace period GP or an obsolescence period OP, that are detailed later.

Another included parameter can e.g. be a building order number BON. Such a building order number BON is typically managed by the registering entity RE, e.g. by mean of a BON generator BG. Said building order number BON can be a random number, or an incremented number. Advantageously it is a unique number, in that the BON generator BG never provides two times the same building order number BON. The inclusion of such a building order number BON is useful in that it makes said external backward code E-BC unique, even for the same IMEI/IMSI couple.

All additional parameters included in a backward code by the algorithm ALG, such as building date BD or building order number BON, must be communicated to the mobile equipment ME, e.g. during the storing step SS, along with the external backward code E-BC, in order for the mobile equipment ME to be able to internally apply said algorithm ALG during computation step CS.

According to an additional feature, the registering entity RE can advantageously manage a database DB to keep a record of each registration. Such record comprises at least the equipment identifier IMEI, the subscriber identifier IMSI and eventually additional parameters. When an IMEI/IMSI couple is provided to the registering entity RE during the building step BS in order to get an external backward code E-BC, the registering entity RE can check if a previous record comprising the same IMEI/IMSI couple already exists in said database DB. Such a case may be normal, since a mobile equipment ME can use different mobile subscriber MS during its life. But if the number of such different mobile subscribers MS becomes too high, it may be indicative of a piracy attempt, and registering entity RE can take appropriate countermeasures.

Once build/produced by the registering entity RE the external backward code E-BC must be transferred and stored into the memory of the mobile equipment ME for later use.

At least two embodiments can be used to do the transfer. According to a first embodiment, the external backward code E-BC, or a code derived from the external backward code E-BC, is communicated to a user, and the user manually enters said code into the mobile equipment ME, using the usual man machine interface means of said mobile equipment ME.

According to a second embodiment, the external backward code E-BC or a code derived from the external backward code E-BC, is automatically and directly communicated to the mobile equipment ME, by any communication means, such as by a message sent by the registering entity RE over the air, OTA. Such a message can be e.g. a short message system, SMS.

Since a valid external backward code E-BC, once registered and stored in a mobile equipment ME, fully allows a normal use of the mobile equipment ME, the storing step SS must also be protected.

To protect the storing step SS, it is advantageous to protect the transfer of the external backward code E-BC before its storing. To do so, the external backward code E-BC is advantageously ciphered using cryptographic means shared between the mobile equipment ME and the communication network/registering entity RE. In that case, the transfer step, be it manual or automatic, is applied to the code derived from the external backward code E-BC instead of the external backward code E-BC itself, and the code derived is the result of a cryptographic method applied to said external backward code E-BC. Such a secure transfer is important for the method not to be fooled.

Once a valid external backward code E-BC has been registered and stored in the mobile equipment ME, and that external backward code E-BC corresponds to the used subscriber identifier IMSI-U of the used mobile subscriber U-MS, the couple mobile equipment ME identified by its used equipment identifier IMEI-U / used mobile subscriber U-MS identified by its used subscriber identifier IMSI-U is authorized and can be used with its full normal capacities.

Algorithm ALG used to build/compute an external/internal backward code E-BC, I-BC can be any kind of mathematical function, as far as it keeps tracks of the inputs in the output. A simple illustrative kind of algorithm that can be used for the ALG algorithm is a checksum. So, as illustrated in figure 1, the building step applies a summation algorithm to the inputs: registered equipment identifier IMEI-R, registered subscriber identifier IMSI-R, building order number BON, building date BD to produce as the output an external backward code E-BC. Accordingly, as illustrated in figure 4, the compute step CS apply the same summation algorithm to the inputs: used equipment identifier IMEI-U that is locally read from the mobile equipment ME, used subscriber identifier IMSI-U that is locally read from the USIM card, building order number BON, building date BD, both having been transferred from the registering entity RE, to produce as the output an internal backward code I-BC. Said internal backward code I-BC is then compared to the stored external backward code E-BC during checking validity step CV.

Some cases may however occur where no external backward code EB-C is stored in the mobile equipment ME or where the used mobile subscriber U-MS does not correspond to any external backward code E-BC stored, that is, the validity check is negative.

Since in said cases it may be difficult to determine whether it is an unusual but authorised case or a piracy/robbery case, some limitation measures may be taken.

Said limitation measures may be either capacity limiting or temporary limiting or both, in that they offer the benefit of doubt but only for a limited number of occurrences or for a limited period or for limited capacities/functionalities. Consequently, an authorised user is temporarily allowed and gets the opportunity to revert back to a nominal fully authorized case, before the end of the temporary measure, where the mobile equipment ME can be blocked. On the contrary, a robber is also only temporarily allowed, until the end of the temporary measure, where the mobile equipment ME would be blocked.

This is typically managed by the allowing step AS.

A first measure to encourage recording by an authorised user and to discourage a robber is to provide only a restricted use of the mobile equipment ME while the validity check is negative. Such a restricted use can limits the functionalities of the mobile equipment ME. It can e.g. limits the phone calls only to some range of called numbers, such as emergency calls. Another way of limiting functionalities is to forbid software update of the mobile equipment ME.

Another limitation measure, intended to cope with the initial life period of the mobile equipment ME, when a user has just bought the mobile equipment ME and not yet proceeded to the registration phase to get a valid external backward code E-BC. In such a case it may be commercially valuable to allow the new owner to either normally or limitedly use the mobile equipment ME, depending on a provider's configuration choice.

One way to do so is to have the allowing step AS allowing a grace number GN of uses of the mobile equipment ME before a first external backward code E-BC is stored, that is while no external backward code E-BC has ever been stored. The allowing step AS then counts the number of uses against said authorised grace number GN and refuses any further use when said number of uses reaches or exceeds said grace number GN, thus effectively blocking the mobile equipment ME.

In that case, a grace period could also be alternately or complementarily allowed. It is however less appropriate to the case, since the starting date of said grace period, that is the purchase date, would be hard to determine.

Another limitation measure, intended to cope with the case where an authorised user changes of used mobile subscriber U-MS, e.g. to a new provider, to a new offer or simply because the USIM card has failed and has to be replaced. In such a case, the user may be given a delay before a new registration, in order to build and store a new external backward code E-BC corresponding to said new used mobile subscriber U-MS and new used subscriber identifier IMSI-U. During that delay said user may be allowed either a normal or restricted use of the mobile equipment ME, depending on a provider's configuration choice.

One way to do so is to have the allowing step AS allowing use of the mobile equipment ME during a grace period GP. Said grace period GP starts with a first negative validity check, following a validly stored previous external backward code E-BC, that is, an external backward code E-BC that previously positively validity checked. Such a condition indicates a subscriber identifier IMSI-U change indicative of an USIM card replacement.

In that case a valid external backward code E-BC has been previously stored in the mobile equipment ME. The first time a validity check reverts back to negative indicates an USIM replacement, and thus a possible robbery attempt. The date of said first time can advantageously be considered the reference date to start said grace period GP. The duration of the grace period GP may be configured by the provider.

After said grace period GP has been started, the allowing step AS checks the current date against the end of the configured grace period GP and authorises use of the mobile equipment ME before the expiration of said grace period GP and refuses any further use when said grace period GP is over, thus effectively blocking the mobile equipment ME.

In that case, a grace number of uses could also be alternately or complementarily allowed.

In case a grace period GP is used, its expiration is computed by comparing the current date with the end of grace period date. A current date is locally available to the mobile equipment ME. However said local current date can be modified by the user. When the user is a robber, said user could change the current date to another date in the past so that the grace period GP would appear to never end. To avoid such a trick, according to an advantageously feature, the expiration of a grace period GP is computed using a current date/time originated from the communication network. Such a date time can be obtained from the network, and cannot be altered by a robber. By doing so, said grace period GP is guaranteed to securely expire on its ending date.

It has been described previously that when a USIM card change is detected, this may trigger the start of a grace period GP. This may lead to the following case. Let us consider that a robber is in possession of at least two USIM cards. The replacement of the initial stolen USIM card by a first of said two USIM cards triggers the start of a first grace period. Another replacement of the first USIM card by the second USIM card is also detected and, if applied before the expiration of said first grace period, may trigger a second grace period. Said process could be repeated endlessly. To avoid such a drawback, according to an advantageous feature, the successive durations of the successive grace periods GP so granted are reduced at each used mobile subscriber UMS change.

Said cumulative reduction can be interrupted e.g. by a storing of a validated external backward code E-BC. In such case, the storing of a valid external backward code E-BC reverts back the duration of the grace period GP to its initial value. For example, the initial duration of the grace period GP can be 30 days. Such a duration is a reasonable compromise between a bigger allowed period to record in case of an authorized user and a smaller allowed period of unauthorized use in case of a robber.

Based on this value when a first used mobile subscriber UMS change is detected, without a corresponding valid external backward code E-BC storing, a first grace period GP of 30 days is started. If a second used mobile subscriber U-MS change is detected, still without a corresponding valid external backward code E-BC storing, a second reduced grace period GP of e.g. 20 days is started. If a third used mobile subscriber UMS change is detected, still without a corresponding valid external backward code E-BC storing, a third reduced grace period of e.g. 10 days is started, and so on.

At any time a valid external backward code E-BC storing reverts back the duration of the grace period GP to its initial value of 30 days, for further uses.

According to another feature, the security of the method can be further enforced by checking the coherency of an external backward code E-BC. This is advantageously done during the storing step SS, before any effective storing.

The principle of said coherency check is based on redundant information included in said external backward code E-BC that can be checked when the mobile equipment receives said external backward code E-BC and the redundant information herein contained. One classical way to provide redundant information is by using a checksum that is included in said external backward code E-BC along with the summed information. So the receiver can verify the coherency by computing the check sum from the transmitted information and compared it to the transmitted checksum.

In line with said feature, the storing step SS may further comprises a step of counting a number of coherency check failures NF. A comparison of said coherency check failures NF to an allowed threshold of authorized such failures can be used by the allowing step AS to block the mobile equipment use when said threshold is exceeded. This is useful to prevent piracy approach randomly trying some external backward code E-BC.

According to another feature, the allowing step AS allows use of the mobile equipment ME while a grace number GN is not exceeded and a grace period GP is not expired and a threshold for the number of coherency check NF is not exceeded.

In the opposite case, the allowing step AS may simply refuse any further use of the mobile equipment ME, until a valid external backward code E-BC is stored. Alternately the method may proceed to a blocking step where the mobile equipment ME is blocked. A unblocking may still be possible but at the expense of a more difficult process, comprising e.g. a manufacture return.

As indicated in the summary, the aim of the method is to counter robbery of a mobile equipment ME and its possible use in a foreign communication network not using any equipment identity register EIR or equivalent means. It appears that a robber's interest to a mobile equipment ME is linked to its novelty, and that said interest quickly decreases after an obsolescence period OP.

According to another feature, after such an obsolescence period OP has elapsed, the method may be amended or suspended such that a normal use of the mobile equipment ME is always allowed.

A first advantage of said obsolescence period OP is to remove the burden of registering from a user, when a strong protection is no longer needed. Another advantage of said obsolescence period OP is to provide at least one way to unblock a maybe blocked mobile equipment ME, but after a period long enough to discourage robbers.

This may be e.g. obtained by an amendment of the method where it does no longer comprise a checking validity step CV. Alternately the allowing step AS can also be amended to always allow a normal use of the mobile equipment ME.

The expiration of said obsolescence period OP may typically be verified by comparing the current date, advantageously obtained from the network, to a starting date. Said starting date may either be a manufacturing date, e.g. determined from a serial number comprised in said mobile equipment identifier IMEI, or alternately, said starting date may advantageously be the first building date BD, that is the date of the first building of an external backward code E-BC stored in the mobile equipment ME. Said building date BD gives a good approximation of the date of first use of the mobile equipment ME, and thus is a rather good date to start an obsolescence period.

The duration of said obsolescence period OP may typically be configured by the provider. A typical duration for said obsolescence period can be e.g. 2 years. It can be considered that after such a duration a mobile equipment ME is no longer considered novel and of interest, at least for robbers.

Due to the numerous states of a mobile equipment ME so protected by the method, it can be useful to figure out to the user in which state the mobile equipment ME is. This can advantageously be done by displaying the state information on the mobile equipment ME, e.g. on the display, e.g. by mean of a logo.

Accordingly, such a logo indicative of the state of the method can be displayed. Said state may at least takes its values among "protected", when an external backward code E-BC is stored into the mobile equipment ME, and "unprotected" when not. More precise states or sub states can also be so indicated. When a grace number GN or a grace period GP is granted, the remaining number/period can so be displayed. When a restricted use only is allowed, at least one logo or pictogram can also indicate it.

Such a state display can be displayed on the mobile equipment ME on demand. Alternately said state display is advantageously always displayed.

Such a state display is useful to inform a user of the exact protection state of its mobile equipment ME, e.g. to confirm that a valid external backward code E-BC has validly been stored.

Such a state display is also useful to warn a potential robber by clearly indicating that the mobile equipment ME is protected.

Such a state display is also useful as a commercial advantage to show a potential buyer that the mobile equipment ME is protected.

Such a state display is also useful to inform/warn a second hand buyer about the protection, so that it can obtain from the seller the associated forward code FC that will allow a new authorised registration after a change of used mobile subscriber U-MS.

## Claims

1. A method to protect a mobile equipment (ME) against robbery **characterized by** comprising the steps of:
- building (BS) an external backward code (E-BC) including the equipment identifier (IMEI-R) of said mobile equipment (ME) and a subscriber identifier (IMSI-R) of a registered mobile subscriber (R-MS), by using an algorithm (ALG),
- storing (SS) said external backward code (E-BC) into said mobile equipment (ME),
- computing (CS) an internal backward code (I-BC) including the equipment identifier (IMEI-U) of said mobile equipment (ME) and the subscriber identifier (IMSI-U) of the mobile subscriber (U-MS) used in said mobile equipment (ME), using the same algorithm (ALG) as the building step (BS),
- checking validity (CV) of the internal backward code (I-BC) against the stored external backward code (E-BC),
- allowing (AS) normal use of the mobile equipment (ME) if said validity check is positive.

2. The method of claim **1,** wherein the building step (BS) is protected by a providing of a forward code (FC) delivered at purchase with said mobile equipment (ME).

3. The method of claim **1** or **2,** wherein the algorithm (ALG) further includes a building date (BD) and/or a building order number (BON) into an external or internal backward code (E-BC, I-BC).

4. The method of any one of claims **1** to **3,** wherein the allowing step (AS) allows only a restricted use of the mobile equipment (ME) if the validity check is negative.

5. The method of any one of claims **1** to **4,** wherein the allowing step (AS) allows a grace number (GN) of normal uses of the mobile equipment (ME) before a first external backward code (E-BC) is stored.

6. The method of any one of claims **1** to **5,** wherein the allowing step allows a grace period (GP) of normal use of the mobile equipment (ME) following a negative validity check.

7. The method of claim **6,** wherein said grace period (GP) is computed based on network time.

8. The method of claim **6** or **7,** wherein a new reduced grace period (GP) starts at each change of used mobile subscriber (U-MS) not validated by a stored external backward code (E-BC).

9. The method of any one of claims **1** to **8,** wherein the storing step (SS) further comprises the steps of checking coherency of the external backward code (E-BC) and counting a number of coherency check failures (NF).

10. The method of any one of claims **1** to **9,** wherein the allowing step (AS) does not allow any use of the mobile equipment (ME) when said grace number (GN) is exceeded or said grace period (GP) is elapsed or the number of coherency check failures (NF) exceeds a threshold.

11. The method of any one of claims **1** to **10,** wherein, after an obsolescence period (OP) has elapsed, a normal use of the mobile equipment (ME) is always allowed.

12. The method of any one of claims **1** to **11,** further comprising a step of displaying on the mobile equipment (ME) a logo indicative of the state of the method among "protected", when an external backward code (E-BC) is stored into the mobile equipment (ME), and "unprotected", when not.

## Patentansprüche

1. Verfahren, um ein mobiles Endgerät (ME) gegen Diebstahl (1) zu schützen, **dadurch gekennzeichnet, dass** es die folgenden Schritte umfasst:
- Aufbauschritt (BS) eines externen Rückwärtscodes (E-BC), einschließlich der IMEI-Nummer (IMEI-R) des besagten mobilen Endgeräts (ME) und einer IMSI-Nummer (IMSI-R) eines registrierten Mobilfunkteilnehmers (R-MS), indem ein Algorithmus (ALG) angewandt wird,
- Speicherung (SS) des besagten externen Rückwärtscodes (E-BC) im besagten mobilen Endgerät (ME),
- Berechnung (CS) eines internen Rückwärtscodes (I-BC, internal backward code), einschließlich der IMEI-Nummer (IMEI-U) des besagten mobilen Endgeräts (ME) und der IMSI-Nummer (IMSI-U) des Mobilfunkteilnehmers (U-MS), die in dem besagten mobilen Endgerät (ME) verwendet werden, wobei der gleiche Algorithmus (ALG) wie beim Aufbauschritt (BS) eingesetzt wird,
- Gültigkeitsprüfung (CV) des internen Rückwärtscodes (I-BC) gegenüber dem gespeicherten externen Rückwärtscode (E-BC),
- Bewilligungsschritt (AS) einer normalen Nutzung des mobilen Endgeräts (ME), wenn die besagte Gültigkeitsprüfung positiv ausgefallen ist.

2. Verfahren nach Anspruch 1, wobei der Aufbauschritt (BS) durch die Bereitstellung eines Vorwärtscodes (FC) geschützt wird, der mit dem Kauf des besagten mobilen Endgeräts (ME) zur Verfügung gestellt wird.

3. Verfahren nach Anspruch 1 oder 2, wobei der Algorithmus (ALG) weiterhin ein Aufbaudatum (BD) und/oder eine Aufbaubestellnummer (BON) in einem externen Rückwärtscode (E-BC, I-BC) umfasst.

4. Verfahren nach einem beliebigen der Ansprüche 1 bis 3, wobei der Bewilligungsschritt (AS) nur eine beschränkte Nutzung des mobilen Endgeräts (ME) ermöglicht, wenn die Gültigkeitsprüfung (CV) negativ ausgefallen ist.

5. Verfahren nach einem beliebigen der Ansprüche 1 bis 4, wobei der Bewilligungsschritt (AS) eine beschränkte Anzahl (GN) der normalen Nutzung des mobilen Endgeräts (ME) ermöglicht, bevor ein erster externer Rückwärtscode (E-BC) gespeichert wird.

6. Verfahren nach einem beliebigen der Ansprüche 1 bis 5, wobei der Bewilligungsschritt nach einer negativ ausgefallenen Gültigkeitsprüfung nur eine befristete Dauer (GP, grace period) der normalen Nutzung des mobilen Endgeräts (ME) ermöglicht.

7. Verfahren nach Anspruch 6, wobei die besagte befristete Dauer (GP) basierend auf der Netzwerkzeit ausgerechnet wird.

8. Verfahren nach Anspruch 6 oder 7, wobei bei jeder Veränderung des Mobilfunkteilnehmers (U-MS), der nicht durch einen gespeicherten externen Rückwärtscode (E-BC) bestätigt wird, eine neue verkürzte und befristete Dauer (GP) gestartet wird.

9. Verfahren nach einem beliebigen der Ansprüche 1 bis 8, wobei die Speicherung (SS) weiterhin Prüfschritte des Zusammenhangs des externen Rückwärtscodes (E-BC) und das Auszählen der Anzahl an Prüffehlern des Zusammenhangs (NF) umfasst.

10. Verfahren nach einem beliebigen der Ansprüche 1 bis 9, wobei der Bewilligungsschritt (AS) keine Nutzung des mobilen Endgeräts (ME) ermöglicht, wenn die besagte beschränkte Anzahl (GN) überschritten wird oder die besagte befristete Dauer (GP) verstrichen ist oder die Anzahl der Prüffehler des Zusammenhangs (NF) einen Schwellenwert überschreitet.

11. Verfahren nach einem beliebigen der Ansprüche 1 bis 10, wobei, nachdem eine Verjährungsfrist (OP) verstrichen ist, eine normale Nutzung des mobilen Endgeräts (ME) immer ermöglicht wird.

12. Verfahren nach einem beliebigen der Ansprüche 1 bis 11, weiterhin umfassend einen Anzeigeschritt eines auf den Status des Verfahrens hinweisenden Logos auf dem mobilen Endgerät (ME) unter "protected" (geschützt), wenn ein externer Rückwärtscode (E-BC) auf dem mobilen Endgerät (ME) gespeichert wird, und "unprotected" (ungeschützt), falls nicht.

## Revendications

1. Procédé pour protéger un équipement mobile (ME) contre le vol, **caractérisé en ce qu'**il comprend les étapes suivantes :
- construire (BS) un code de retour externe (E-BC) comprenant l'identifiant d'équipement (IMEI-R) dudit équipement mobile (ME) et un identifiant d'abonné (IMSI-R) d'un abonné mobile enregistré (R-MS), en utilisant un algorithme (ALG),
- stocker (SS) ledit code de retour externe (E-BC) dans ledit équipement mobile (ME),
- calculer (CS) un code de retour interne (I-BC) comprenant l'identifiant d'équipement (IMEI-U) dudit équipement mobile (ME) et l'identifiant d'abonné (IMSI-U) de l'abonné mobile (U-MS) utilisé dans ledit équipement mobile (ME), en utilisant le même algorithme (ALG) que dans l'étape de construction (BS),
- vérifier la validité (CV) du code de retour interne (I-BC) par rapport au code de retour externe (E-BC) stocké,
- autoriser (AS) l'utilisation normale de l'équipement mobile (ME) si ladite vérification de la validité est positive.

2. Procédé selon la revendication 1, dans lequel l'étape de construction (BS) est protégée par la fourniture d'un code d'aller (FC) délivré à l'achat avec ledit équipement mobile (ME).

3. Procédé selon la revendication 1 ou 2, dans lequel l'algorithme (ALG) comprend en outre une date de construction (BD) et/ou un numéro d'ordre de construction (BON) dans un code de retour externe ou interne (E-BC, I-BC).

4. Procédé selon l'une quelconque des revendications 1 à 3, dans lequel l'étape d'autorisation (AS) ne permet qu'une utilisation limitée de l'équipement mobile (ME) si la vérification de la validité est négative.

5. Procédé selon l'une quelconque des revendications 1 à 4, dans lequel l'étape d'autorisation (AS) permet un nombre de grâce (GN) d'utilisations normales de l'équipement mobile (ME) avant qu'un premier code de retour externe (E-BC) ne soit stocké.

6. Procédé selon l'une quelconque des revendications 1 à 5, dans lequel l'étape d'autorisation permet un délai de grâce (GP) d'utilisation normale de l'équipement mobile (ME) suite à une vérification négative de la validité.

7. Procédé selon la revendication 6, dans lequel ledit délai de grâce (GP) est calculé sur la base du temps de réseau.

8. Procédé selon la revendication 6 ou 7, dans lequel un nouveau délai de grâce (GP) réduit commence à chaque changement d'abonné mobile utilisé (U-MS) non validé par un code de retour externe (E-BC) stocké.

9. Procédé selon l'une quelconque des revendications 1 à 8, dans lequel l'étape de stockage (SS) comprend en outre les étapes de vérification de cohérence du code de retour externe (E-BC) et de comptage d'un nombre de défaillances de vérification de cohérence (NF).

10. Procédé selon l'une quelconque des revendications 1 à 9, dans lequel l'étape d'autorisation (AS) n'autorise aucune utilisation de l'équipement mobile (ME) lorsque ledit nombre de grâce (GN) est dépassé ou lorsque ledit délai de grâce (GP) est écoulé ou lorsque le nombre de défaillances de vérification de cohérence (NF) dépasse un seuil.

11. Procédé selon l'une quelconque des revendications 1 à 10, dans lequel, après qu'une période d'obsolescence (OP) s'est écoulée, une utilisation normale de l'équipement mobile (ME) est toujours autorisée.

12. Procédé selon l'une quelconque des revendications 1 à 11, comprenant en outre une étape d'affichage sur l'équipement mobile (ME) d'un logo indiquant l'état du procédé parmi « protégé », lorsqu'un code de retour externe (E-BC) est stocké dans l'équipement mobile (ME) et « non-protégé », lorsqu'il ne l'est pas.
